# EUROPEAN PATENT APPLICATION

(11) **EP 2 063 314 A2**
(43) Date of publication of application: **27.05.2009**
(21) Application number: 08013750.8
(22) Date of filing: 31.07.2008
(51) Int. Cl.: G02F 1/13357, G02B 5/04, G02B 5/30

(54) **Optical film and liquid crystal display including the same**

(30) Priority: 26.11.2007 KR 20070121132; 26.11.2007 KR 20070121126
(71) Applicant: LG Electronics Inc., Seoul 150-010 (KR)
(72) Inventor: Lee, Junghoon, Chungcheongbuk-do 361-480 (KR); Hwang, Kanjin, Chungcheongbuk-do 361-480 (KR); Lee, Seungho, Chungcheongbuk-do 361-480 (KR); Yoon, Cheol, Chungcheongbuk-do 361-480 (KR); Kwon, Seungwook, Chungcheongbuk-do 361-480 (KR); Kim, Yongsu, Chungcheongbuk-do 361-480 (KR); Han, Byeongheui, Chungcheongbuk-do 361-480 (KR); Kim, Changjong, Chungcheongbuk-do 361-480 (KR)
(74) Representative: Katérle, Axel

(57) **Abstract**

An optical film and a liquid crystal display including the optical film are disclosed. The optical film includes a reflective polarizing film (830), a first primer layer (810) on the reflective polarizing film, and a first projection (821,822) on the first primer layer.

## Description

### BACKGROUND

### 1. Field

An exemplary embodiment relates to an optical film including a reflective polarizing film and a liquid crystal display including the optical film.

### 2. Description of the Related Art

Recently, a display field converting information for various electrical signals into visual information is rapidly developing. Accordingly, flat panel display devices with excellent characteristics such as thin film, lightweight, low power consumption have been introduced. The flat panel display devices have rapidly replaced the existing cathode ray tubes and have been spotlighted.

Examples of the flat panel display devices may include a liquid crystal display (LCD), a plasma display panel (PDP), a field emission display (FED), and an electroluminescence display (ELD). Because the liquid crystal display has a high contrast ratio and an excellent performance to display a moving picture, the liquid crystal display is being briskly used in a display screen for notebook, a monitor, and a television.

The liquid crystal display may be classified as a light receiving display device. The liquid crystal display may include a liquid crystal panel displaying an image and a backlight unit that is positioned under the liquid crystal panel and provides the liquid crystal panel with light.

The backlight unit may include a light source providing the liquid crystal panel with light and an optical film. The optical film may include a diffusion sheet, a prism sheet, or a protective sheet.

The optical film may include a plurality of optical sheets for performing the diffusion and focus of the light produced by the light source. However, there are many problems to improve the manufacturing yield and luminance of the liquid crystal display.

### SUMMARY

An exemplary embodiment provides an optical film and a liquid crystal display including the optical film capable of providing a clear image and improving the light efficiency.

In one aspect, an optical film comprises a reflective polarizing film, a first primer layer on the reflective polarizing film, and a first projection on the first primer layer.

In another aspect, a liquid crystal display device comprises a light source, an optical film on the light source, the optical film including a reflective polarizing film, a base film on the reflective polarizing film, a first primer layer on the base film, a first projection on the first primer layer, and a liquid crystal panel on the optical film.

In still another aspect, an optical film comprises a reflective polarizing film, a base film on the reflective polarizing film, and a plurality of projections on the base film, the projections including a first projection and a second projection, a height of the projection being different from a height of the second projection.

### BRIEF DESCRIPTION OF THE DRAWINGS

The accompany drawings, which are included to provide a further understanding of the invention and are incorporated on and constitute a part of this specification, illustrate embodiments of the invention and together with the description serve to explain the principles of the invention. In the drawings:

FIGs. 1 to 7 show an optical film according to an exemplary embodiment;

FIG. 8 is a cross-sectional view of an optical film according to another exemplary embodiment;

FIGs 9 to 11 are cross-sectional views of an optical film according to another exemplary embodiment;

FIG. 12 shows an optical film according to another exemplary embodiment;

FIG. 13 is a diagram enlarging an area A of FIG. 12;

FIG. 14 is a plane view of FIG. 12;

FIGs. 15 to 23 show an optical film according to another exemplary embodiment;

FIGs. 24 and 25 are an exploded perspective view and a cross-sectional view of a backlight unit;

FIGs. 26 and 27 are an exploded perspective view and a cross-sectional view of a backlight unit; and

FIGs. 28 and 29 are an exploded perspective view and a cross-sectional view of a liquid crystal display.

### DETAILED DESCRIPTION OF EMBODIMENTS

Reference will now be made in detail embodiments of the invention examples of which are illustrated in the accompanying drawings.

An optical film comprises a reflective polarizing film, a first primer layer on the reflective polarizing film, and a first projection on the first primer layer.

The optical film may further comprise a second primer layer under the reflective polarizing film, a thickness of the second primer layer lies substantially in a range between 5 nm and 300 nm.

The optical film may further comprise a protective layer on the reflective polarizing layer.

A thickness of the first primer layer may lie substantially in a range between 5 nm and 300 nm.

The first projection may be at least one of a microlens array, a lenticular lens array, a diffuser unit, and a prism unit.

The first projection may include a plurality of beads.

The reflective polarizing film may include first layers and second layers alternately stacked on each other, and a refractive index of the first layer may be different from a refractive index of the second layer.

The optical film may further comprise a base film on the reflective polarizing film, wherein the first primer layer may be positioned on the base film.

A liquid crystal display device comprise a light source, an optical film on the light source, the optical film including a reflective polarizing film, a base film on the reflective polarizing film, a first primer layer on the base film, and a first projection on the first primer layer, and a liquid crystal panel on the optical film.

A thickness of the first primer layer may lie substantially in a range between 5 nm and 300 nm.

An optical film comprises a reflective polarizing film, a base film on the reflective polarizing film, and a plurality of projections on the base film, the projections including a first projection and a second projection, a height of the first projection being different from a height of the second projection.

The projections may have different heights along a longitudinal direction of the projections.

The optical film may further comprise a first primer layer on the base film.

A thickness of the first primer layer lies substantially in a range between 5 nm and 300 nm.

The projection may include a plurality of valleys, and depths of the valleys may be different from each other.

The projection may include a plurality of peaks, and heights of the peaks may change randomly.

The plurality of projections may include a plurality of first beads.

The optical film may further comprise a protective layer under the reflective polarizing film, and the protecting layer may be a diffusion unit or a mat layer.

The protective layer may include a resin and a plurality of second beads.

Hereinafter, exemplary embodiments will be described in detail with reference to the attached drawings.

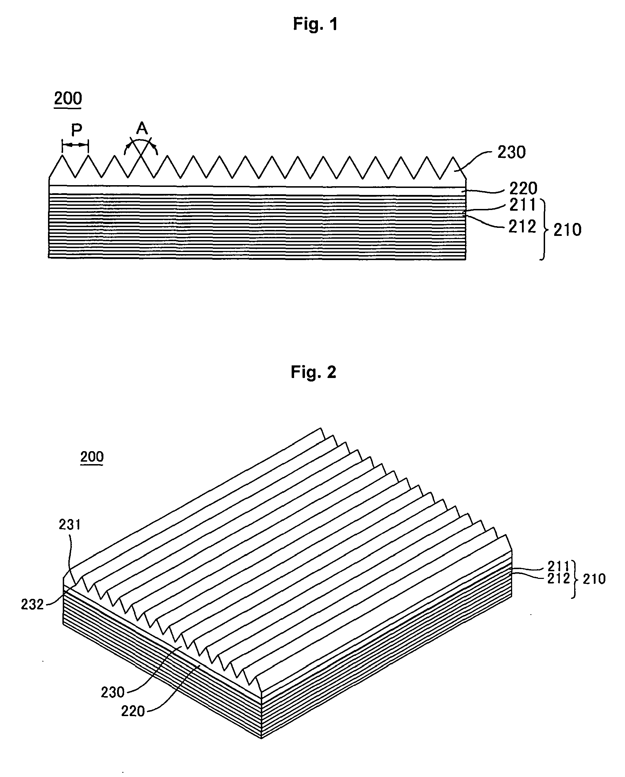

FIGs. 1 to 7 show an optical film 200 according to an exemplary embodiment.

As shown in FIGs. 1 to 7, the optical film 200 may include a reflective polarizing film 210, a first primer layer 220 on the reflective polarizing film 210, and a first projection 230 on the first primer layer 220.

The reflective polarizing film 210 can transmit and/or reflect light produced by a light source. The reflective polarizing film 210 may include a first layer 211 including a polymer and a second layer 212 adjacent to the first layer 211. The second layer 212 may include a polymer having a refractive index different from a refractive index of the polymer of the first layer 211.

The first layers 211 and the second layers 212 may be alternately stacked on each other. The first layer 211 may be made of polymethylmethacrylate (PMMA), and the second layer 212 may be made of Polyethylene Terephthalate (PET).

The reflective polarizing film 210 may have substantially a thickness of 120 µm to 450 µm.

Accordingly, a portion of the light produced by the light source is transmitted by the reflective polarizing film 210, and a portion of the light is reflected from the reflective polarizing film 210 toward the light source under the reflective polarizing film 210. The light reflected toward the light source is again reflected and is incident on the reflective polarizing film 210. A portion of the light incident on the reflective polarizing film 210 transmits the reflective polarizing film 210, and a portion of the incident light is again reflected from the reflective polarizing film 210 toward the light source under the reflective polarizing film 210.

In other words, because the reflective polarizing film 210 is formed by alternately stacking the polymer layers each having a different refractive index on each other using a principle in which a polarization of a different direction is transmitted and a polarization of the same direction is reflected by orienting molecules of the polymer in one direction, the efficiency of the light produced by the light source can be improved.

The first primer layer 220 may be obtained through a primer processing. The primer processing is performed through a polymer processing on a general polymer film and thus can improve an adhesive force between the polymer film and an ultraviolet (UV) resin. Acrylic-based polymer, ester-based polymer, or urethane-based polymer may by used in the primer processing. A water-soluble polymer material may by used in the primer processing so as to prevent the risk of fire. The primer processing may be performed by coating the above-described polymer material on a base film to be primer-processed using a coater.

The first primer layer 220 thus formed may have substantially a thickness of 5 nm to 300 nm. When the thickness of the first primer layer 220 is equal to or larger than 5 nm, a difficulty about an improvement in an adhesive force caused by the very thin first primer layer 220 can be solved. When the thickness of the first primer layer 220 is equal to or smaller than 300 nm, a coating spot generated in the primer processing and a lump phenomenon of the polymer material can be prevented.

The following Table 1 indicates transmittance characteristics and adhesive characteristics depending on the thickness of the first primer layer 220. In Table 1, ⊚ indicates an excellent state; ○ indicates a good state; and Δ indicates a normal state.

**[Table 1]**

| Thickness of first primer layer (nm) | Transmittance characteristics | Adhesive characteristics |
|---|---|---|
| 3 | ⊚ | Δ |
| 5 | ⊚ | Δ |
| 10 | ⊚ | Δ |
| 30 | ⊚ | ○ |
| 90 | ○ | ○ |
| 130 | ○ | ○ |
| 200 | ○ | ⊚ |
| 250 | Δ | ⊚ |
| 300 | Δ | ⊚ |

As indicated in the above Table 1, a luminance and a color coordinate can be improved by finely adjusting the thickness of the first primer layer 220.

Accordingly, when the primer processing is performed between the reflective polarizing film 210 and the first projection 230, a light transmittance and adhesive characteristics can be improved by adjusting the thickness of the first primer layer 220.

The first primer layer 220 can induce a chemical adhesion between the reflective polarizing film 210 and the first projection 230.

In other words, the reflective polarizing film 210 may include poly-based resin, and the first projection 230 may include UV-based resin. If the reflective polarizing film 210 is attached to the first projection 230 through the physical attachment, it is difficult to expect an excellent adhesive force because an adhesive surface between the reflective polarizing film 210 and the first projection 230 is smooth. However, when the reflective polarizing film 210 is attached to the first projection 230 through the chemical adhesion by forming the first primer layer 220 between the reflective polarizing film 210 and the first projection 230, the adhesive force stronger than the adhesive force of the physical attachment can be obtained, and the adhesive surface between the reflective polarizing film 210 and the first projection 230 can be protected.

The following reaction formula 1 indicates a chemical reaction formula between a resin and urethane depending on UV hardening when a resin is used as the first projection 230 and urethane is used as the first primer layer 220.

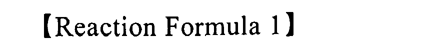

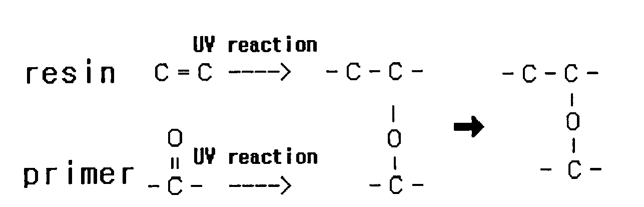

The first projection 230 on the first primer layer 220 can focus and diffuse light produced by the light source.

The first projection 230 may be made of a transparent polymer resin capable of transmitting light emitted from the outside. Examples of the transparent polymer resin may include polycarbonates resin, polypropylene resin, polyethylene resin, and polyethylene terephthalate resin.

The first projection 230 may have a triangle-shaped section. As shown in FIG. 2, the first projection 230 may include a plurality of peaks 231 and a plurality of valleys 232. The peaks 231 and the valleys 232 may be formed in a straight line along a longitudinal direction of the first projection 230.

A distance P between the peaks 231 of the first projection 230 may be substantially 20 µm to 60 µm. An angle A of the peak 231 may be substantially 70 ° to 110 ° . A height H of the first projection 230 may be substantially 10 µm to 300 µm.

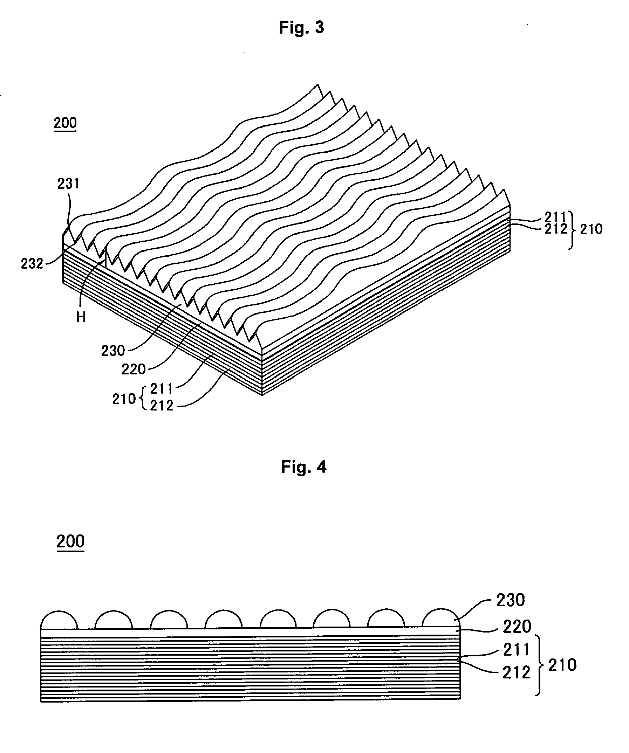

As shown in FIG. 3, the peaks 231 or the valleys 232 of the first projection 230 may form a continuously curved line in the longitudinal direction of the first projection 230. The curved line may be regular or irregular. More specifically, the peaks 231 may be formed in a zigzag form in which right and left sides are random. An average horizontal amplitude of the peaks 231 may lie substantially in a range between 1 µm and 20 µm. Further, the valley 232 may be formed in a zigzag form in which right and left sides are random. An average horizontal amplitude of the valley 232 may lie substantially in a range between 1 µm and 20 *µ*m.

The height h of the peak 231 as measured from a bottom surface of the peak 231 may continuously change along a longitudinal direction of the first projection 230. The peak 231 may form a regular or irregular curve. An average height difference between the heights of the peaks 231 may lie substantially in a range between 1 *µ*m and 20*µ*m.

The first projection 230 may be a hemispherical-shaped section.

More specifically, the first projection 230, as shown in FIG. 4, may be a microlens array. The first projection 230 may be an array of a plurality of microlenses 235. The diffusion, refraction or focus of light may depend on a diameter and a density of the microlens 235. The diameter of the microlens 235 may be substantially 20 µm to 200 µm. A percentage of an area occupied by the microlenses 235 may be substantially 80 % to 90 % of the total area of the optical film 200. The area percentage of the microlenses 235 may be large than 90 %.

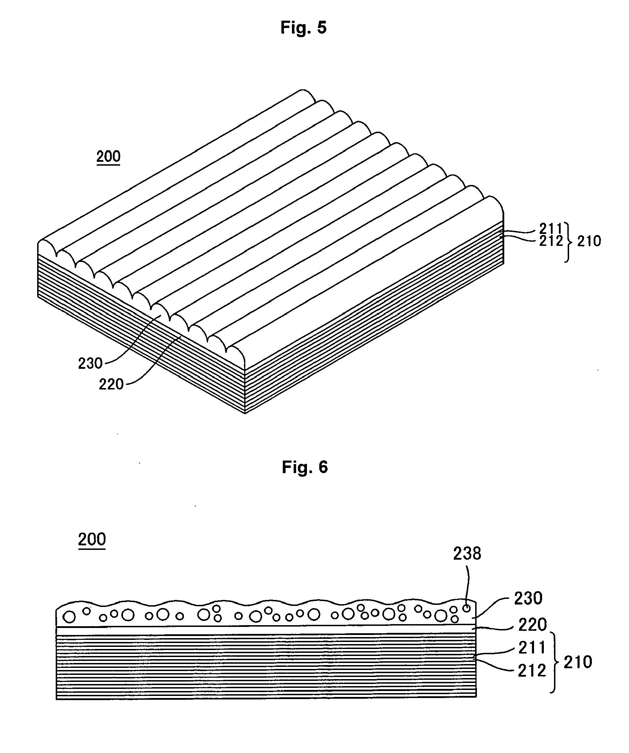

The first projection 230, as shown in FIG. 5, may be an array of lenticular lenses. The lenticular lens may be a tunnel form in which the inside of the lenticular lens is full. The diffusion, refraction or focus of light may depend on a pitch and a height of each of the lenticular lenses.

The first projection 230, as shown in FIG. 6, may be a diffusion unit. The first projection 230 may include a plurality of beads 238, and the bead 238 can diffuse light produced by the light source.

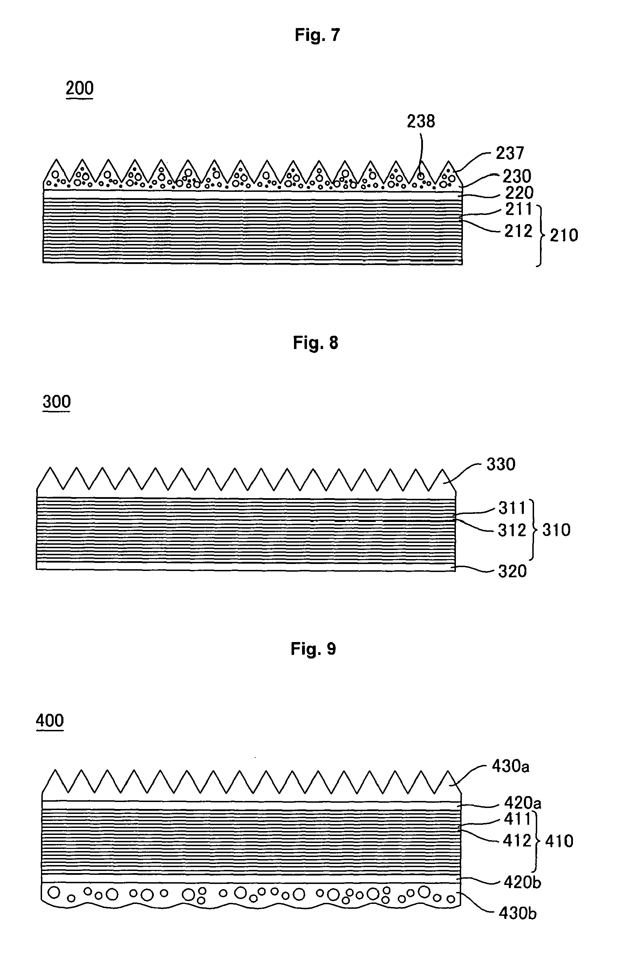

The first projection 230, as shown in FIG. 7, may include a resin 237 and the plurality of beads 238. The resin 237 may be an acrylic resin. The bead 238 may include at least one of polymethylmethacrylate (PMMA), polystyrene, and silicon. The first projection 230 may include about 1 to 10 parts by weight of the bead 238 based on the resin 237. Particle diameters of the beads 238 inside the resin 237 may be non-uniform. A shape of the bead 238 may be a circle, an oval, a shape like a snowman, and an uneven circle, but is not limited thereto.

The beads 238 may be non-uniformly distributed inside the resin 237. All the beads 238 may be distributed inside the resin 237 so as not to expose the beads 238 on the surface of the first projection 230.

Accordingly, because the optical film 200 includes the plurality of beads 238 inside the first projection 230, light produced by the light source can be diffused.

Although the first projection 230 having the triangle-shaped section was described above, it is not limited thereto. The first projection 230 may have the above-described various shapes and include the plurality of beads.

FIG. 8 is a cross-sectional view of an optical film 300 according to another exemplary embodiment.

As shown in FIG. 8, the optical film 300 may include a reflective polarizing film 310, a first primer layer 320 under the reflective polarizing film 310, and a first projection 330 on the reflective polarizing film 310.

The first primer layer 320 may be positioned under the reflective polarizing film 310 differently from the first primer layer 220 shown in FIGs. 1 to 7.

The first primer layer 320 can protect the optical film 300 from heat generated in a light source positioned under the optical film 300, and adjust optical characteristics by refracting light produced by the light source.

Since a configuration of the optical film 300 shown in FIG. 8 is the same as that of the optical film 200 shown in FIGs. 1 to 7, the description thereabout is briefly made or entirely omitted.

FIG. 9 is a cross-sectional view of an optical film 400 according to another exemplary embodiment.

As shown in FIG. 9, the optical film 400 may include a reflective polarizing film 410, a first primer layer 420a on one surface of the reflective polarizing film 410, a second primer layer 420b on the other surface of the reflective polarizing film 410, a first projection 430a on the first primer layer 420a, and a second projection 430b on the second primer layer 420b.

Since configurations of the reflective polarizing film 410, the first primer layer 420a, and the first projection 430a are described above with reference to FIGs. 1 to 7, the description thereabout is briefly made or entirely omitted.

The second primer layer 420b on the other surface of the reflective polarizing film 410 may be formed through a primer processing in the same way as the first primer layer 420a. The second primer layer 420b may use acrylic-based polymer, ester-based polymer, or urethane-based polymer, and may use a water-soluble polymer material so as to prevent the risk of fire.

The second primer layer 420b may have substantially a thickness of 5 nm to 300 nm. When the thickness of the second primer layer 420b is equal to or larger than 5 nm, a difficulty about an improvement in an adhesive force caused by the very thin second primer layer 420b can be solved. When the thickness of the second primer layer 420b is equal to or smaller than 300 nm, a coating spot generated in the primer processing and a lump phenomenon of the polymer material can be prevented.

The second projection 430b on the second primer layer 420b can focus and diffuse light produced by a light source.

The second projection 430b may be made of a transparent polymer resin capable of transmitting light emitted from the outside. Examples of the transparent polymer resin may include acrylic resin, polycarbonates resin, polypropylene resin, polyethylene resin, and polyethylene terephthalate resin.

The second projection 430b may have a configuration similar to the first projection 430a. The second projection 430b may be at least one of a prism unit, a microlens array, a lenticular lens array, or a diffusion unit. The second projection 430b may include a plurality of beads (not shown).

Although the optical film 400 is briefly described with reference to FIG. 9, the optical film 400 may include all the configuration of the optical films according to the above-described exemplary embodiments.

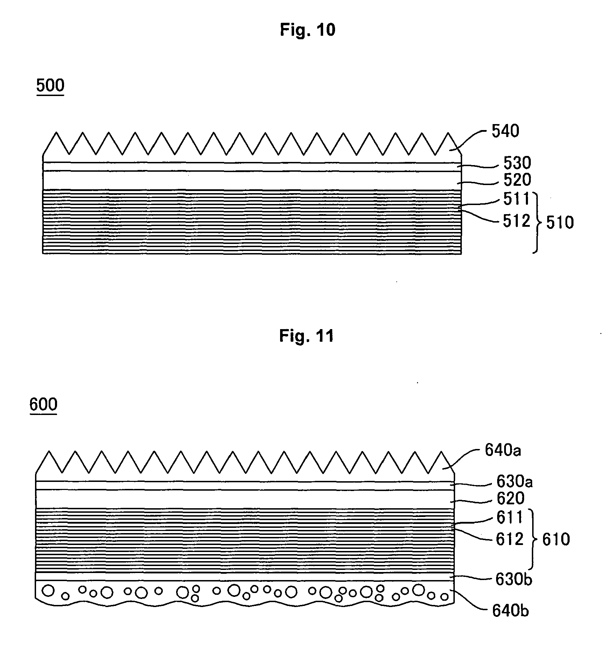

FIG. 10 is a cross-sectional view of an optical film 500 according to another exemplary embodiment.

As shown in FIG. 10, the optical film 500 may include a reflective polarizing film 510, a base film 520 on the reflective polarizing film 510, a first primer layer 530 on the base film 520, and a first projection 540 on the first primer layer 530.

Since configurations of the reflective polarizing film 510, the first primer layer 530, and the first projection 540 are described above with reference to FIGs. 1 to 7, the description thereabout is briefly made or entirely omitted.

The base film 520 can transmit light produced by a light source. Therefore, the base film 520 may be made of a light transmission material capable of transmitting light, for example, any one of polyethylene terephthalate, polycarbonates, polypropylene, polyethylene, polystyrene, and polyepoxy, but is not limited thereto.

The base film 520 may substantially have a thickness of 10 µm to 1000 µm. When the thickness of the base film 520 is equal to or larger than 10 µm, a mechanical strength and a thermal stability of the optical film 500 can be secured. When the thickness of the base film 520 is equal to or smaller than 1000 µm, a flexibility of the optical film 500 can be kept while the mechanical strength and the thermal stability of the optical film 500 are secured.

Accordingly, since the optical film 500 includes the reflective polarizing film 510, the base film 520 on the reflective polarizing film 510, the first primer layer 530 on the base film 520, and the first projection 540 on the first primer layer 530, the mechanical strength, the thermal stability, and the flexibility of the optical film 500 can be secured.

FIG. 11 is a cross-sectional view of an optical film 600 according to another exemplary embodiment.

As shown in FIG. 11, the optical film 600 may include a reflective polarizing film 610, a base film 620 on one surface of the reflective polarizing film 610, a first primer layer 630a on the base film 620, and a first projection 640a on the first primer layer 630a. The optical film 600 may further include a second primer layer 630b on the other surface of the reflective polarizing film 610 and a second projection 640b on the second primer layer 630b.

Since configurations of the reflective polarizing film 610, the first primer layer 630a, and the first projection 640a are described above with reference to FIGs. 1 to 7, the description thereabout is briefly made or entirely omitted.

The second primer layer 630b on the other surface of the reflective polarizing film 610 may be formed through a primer processing in the same way as the first primer layer 630a.

The second primer layer 630b may use acrylic-based polymer, ester-based polymer, or urethane-based polymer, and may use a water-soluble polymer material so as to prevent the risk of fire.

The second primer layer 630b may have substantially a thickness of 5 nm to 300 nm. When the thickness of the second primer layer 630b is equal to or larger than 5 nm, a difficulty about an improvement in an adhesive force caused by the very thin second primer layer 630b can be solved. When the thickness of the second primer layer 630b is equal to or smaller than 300 nm, a coating spot generated in the primer processing and a lump phenomenon of the polymer material can be prevented.

The second projection 640b on the second primer layer 630b can focus and diffuse light produced by a light source.

The second projection 640b may be made of a transparent polymer resin capable of transmitting light emitted from the outside. Examples of the transparent polymer resin may include acrylic resin, polycarbonates resin, polypropylene resin, polyethylene resin, and polyethylene terephthalate resin.

The second projection 640b may have a configuration similar to the first projection 640a. The second projection 640b may be at least one of a prism unit, a microlens array, a lenticular lens array, or a diffusion unit. The second projection 640b may include a plurality of beads (not shown).

Although the optical film 600 is briefly described with reference to FIG. 11, the optical film 600 may include all the configuration of the optical films according to the above-described exemplary embodiments.

As described above, in the optical film 600 shown in FIG. 11, an adhesive force between the projection on the reflective polarizing film or the base film and the reflective polarizing film or the base film can be strengthened by forming the primer layer on the reflective polarizing film or the base film using the primer processing.

Accordingly, the optical films according to the above-described exemplary embodiments can be used in a backlight unit with a uniform luminance or a liquid crystal display with the excellent display quality.

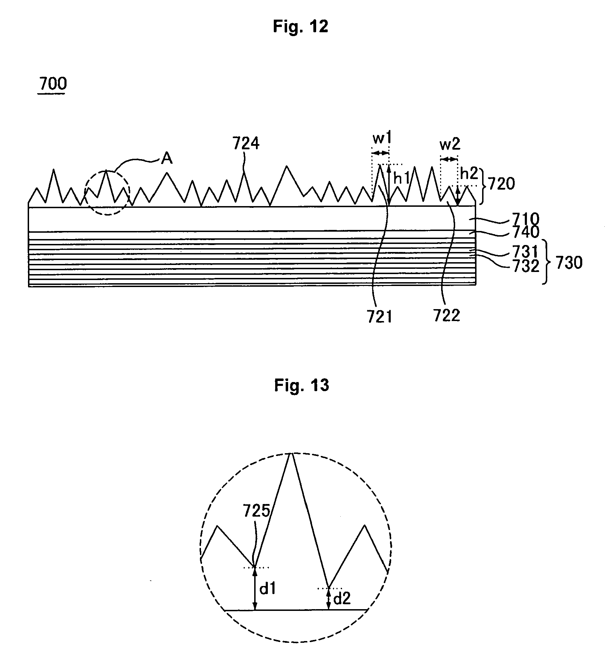

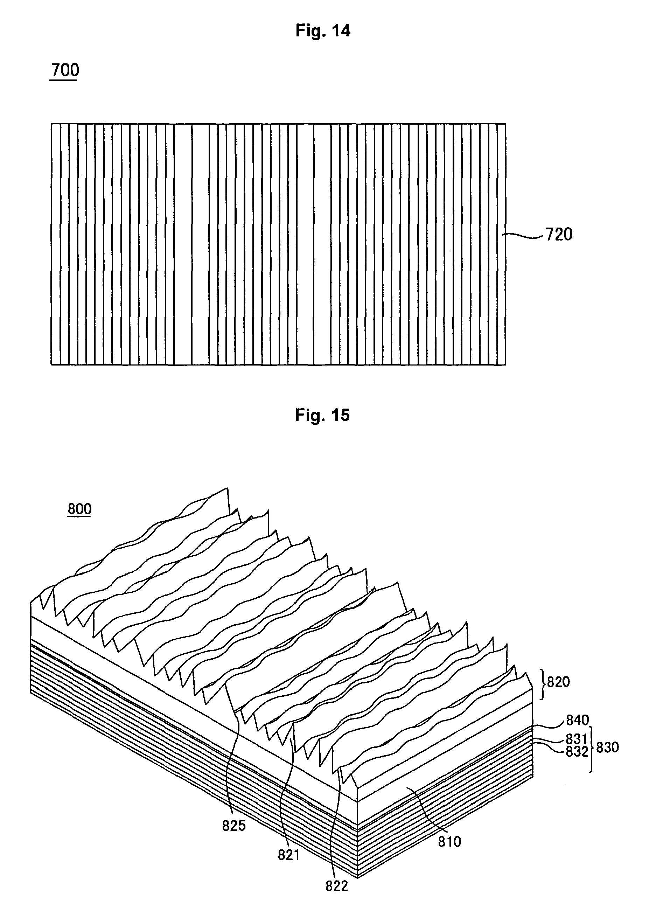

FIG. 12 shows an optical film 700 according to another exemplary embodiment, FIG. 13 is a diagram enlarging an area A of FIG. 12, and FIG. 14 is a plane view of FIG. 12.

As shown in FIGs. 12 to 14, the optical film 700 may include a base film 710, a plurality of projections 720 on the base film 710, and a reflective polarizing film 730 under the base film 710. The plurality of projections 720 may include a first projection 721 and a second projection 722.

More specifically, the base film 710 can transmit light produced by a light source. Therefore, the base film 710 may be made of a light transmission material capable of transmitting light, for example, any one of polyethylene terephthalate, polycarbonates, polypropylene, polyethylene, polystyrene, and polyepoxy, but is not limited thereto.

The projections 720 can focus and diffuse light produced by the light source. A height h1 and a width w1 of the first projection 721 may be different from a height h2 and a width w2 of the second projection 722, respectively.

The plurality of projections 720 may be linearly formed along a longitudinal direction of the projections 720, but is not limited thereto.

The plurality of projections 720 may have a different section shape. For example, the section shape of the plurality of projections 720 may be an isosceles triangle and an equilateral triangle. Further, the plurality of projections 720 may have the same section shape.

A section shape of the first projection 721 may be different from a section shape of the second projection 722. Further, the first projection 721 and the second projection 722 may have the same section shape.

While the height h1 and the width w1 of the first projection 721 may be different from the height h2 and the width w2 of the second projection 722, respectively, the height h1 and the width w1 of the first projection 721 may be equal to the height h2 and the width w2 of the second projection 722, respectively. In other words, the plurality of projections 720 may be regularly arranged.

The plurality of projections 720 may have substantially a thickness of 20 µm to 500 µm. The plurality of projections 720 may have different widths within a range between 1 µm to 100 µm.

When the height and the width of the plurality of projections 720 lie in the above range, namely, the range between 20 µm to 500 µm and the range between 1 µm to 100 µm, respectively, focus characteristics of the plurality of projections 720 can be improved.

The projections 720 may include a peak 724, and a height of the peak 724 may randomly change. The height of the peak 724 may be defined as a distance between one surface of the base film 710 and a highest portion of the projections 720.

As shown in FIG. 13, the projections 720 may include a valley 725 where the projections 720 meet each other. Depths d1 and d2 of the valleys 725 may be different from each other. Further, the depths d1 and d2 of the valleys 725 may be equal to each other.

The reflective polarizing film 730 can transmit or reflect light produced by the light source. The reflective polarizing film 730 may include a first layer 731 including a polymer and a second layer 732 adjacent to the first layer 731. The second layer 732 may include a polymer having a refractive index different from a refractive index of the polymer of the first layer 731.

The first layers 731 and the second layers 732 may be alternately stacked on each other. The first layer 731 may be made of polymethylmethacrylate (PMMA), and the second layer 732 may be made of Polyethylene Terephthalate (PET).

The reflective polarizing film 730 may have substantially a thickness of 120 µm to 450 µm.

Accordingly, a portion of the light produced by the light source is transmitted by the reflective polarizing film 730, and a portion of the light is reflected from the reflective polarizing film 730 toward the light source under the reflective polarizing film 730. The light reflected toward the light source is again reflected and is incident on the reflective polarizing film 730. A portion of the light incident on the reflective polarizing film 730 transmits the reflective polarizing film 730, and a portion of the incident light is again reflected from the reflective polarizing film 730 toward the light source under the reflective polarizing film 730.

In other words, because the reflective polarizing film 730 is formed by alternately stacking the polymer layers each having a different refractive index on each other using a principle in which a polarization of a different direction is transmitted and a polarization of the same direction is reflected by orienting molecules of the polymer in one direction, the efficiency of the light produced by the light source can be improved.

The optical film 700 may further include an adhesive layer 740 between the base film 710 and the reflective polarizing film 730. The adhesive layer 740 can attach the base film 710 to the reflective polarizing film 730. The adhesive layer 740 may be made of acrylic resin.

As described above, because the optical film 700 includes the irregularly arranged plurality of projections 720 and the reflective polarizing film 730, the efficiency of light produced by the light source can be improved and a light interference phenomenon can be prevented by irregularly refracting the light produced by the light source through the projections 720. Hence, the clarity of an image can be improved.

Various configurations of an optical film will be described in detail below. Although a description about a projection will not be described below, the projection may include the configuration of the projection of the above-described exemplary embodiments.

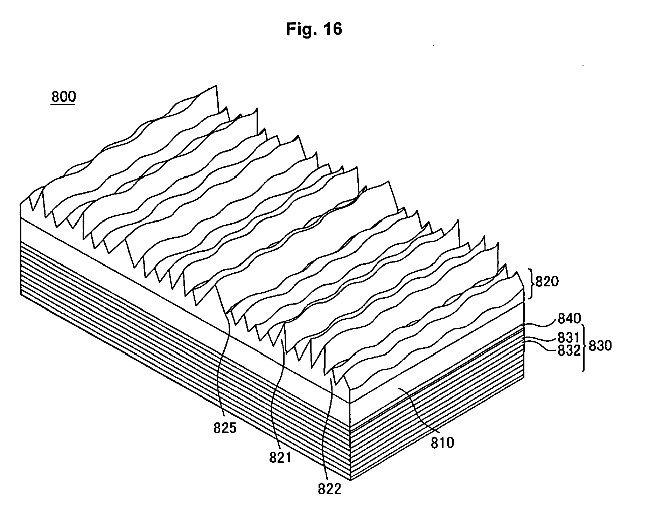

FIGs. 15 to 19 show an optical film 800 according to another exemplary embodiment.

As shown in FIGs. 15 to 19, the optical film 800 may include a base film 810, a plurality of projections 820 on the base film 810, and a reflective polarizing film 830 under the base film 810. The plurality of projections 820 may include a first projection 821 and a second projection 822. A height of the first projection 821 may be different from a height of the second projection 822.

The plurality of projections 820 may form a continuously curved line. More specifically, the plurality of projections 820 may be formed in a zigzag form in which right and left sides are random. An average horizontal amplitude of the plurality of projections 820 may lie substantially in a range between 1 µm and 20 *µ*m.

The projections 820 may include a valley 825 where the projections 820 meet each other. The valley 825 may be formed in a zigzag form in which right and left sides are random. An average horizontal amplitude of the valley 825 may lie substantially in a range between 1 µm and 20 µm.

The projections 820 may have different heights along a longitudinal direction of the projections 820. In other words, the heights of the projections 820 as measured from a bottom surface of the projection 820 may change regularly or irregularly. An average height difference between the heights of the projections 820 may lie substantially in a range between 1 µm and 20 µm.

An interval between the projections 820 may lie substantially in a range between 1 µm and 10 µm.

Depths of the valleys 825 may be different from one another. Further, the depths of the valleys 825 may be equal to one another.

As described above, the average horizontal amplitude of the projections 820 or the valleys 825 may change randomly, and the heights of the projections 820 or the depths of the valleys 825 may change regularly or irregularly.

The optical film 800 may further include an adhesive layer 840 between the base film 810 and the reflective polarizing film 830. The adhesive layer 840 can attach the base film 810 to the reflective polarizing film 830. The adhesive layer 840 may be made of acrylic resin.

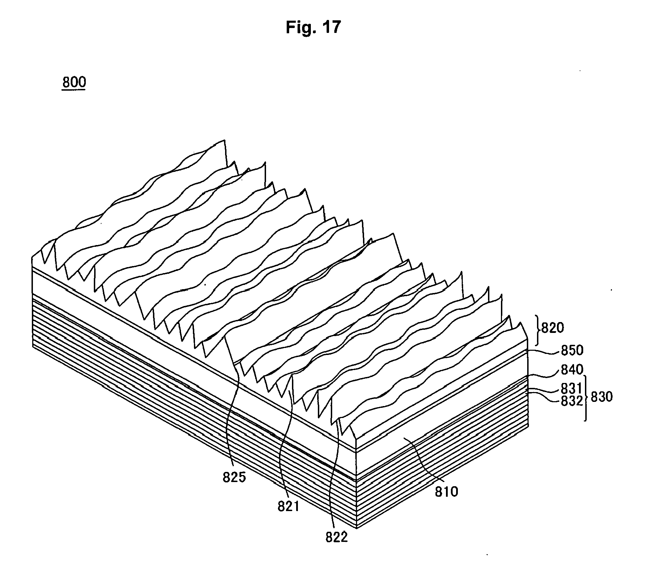

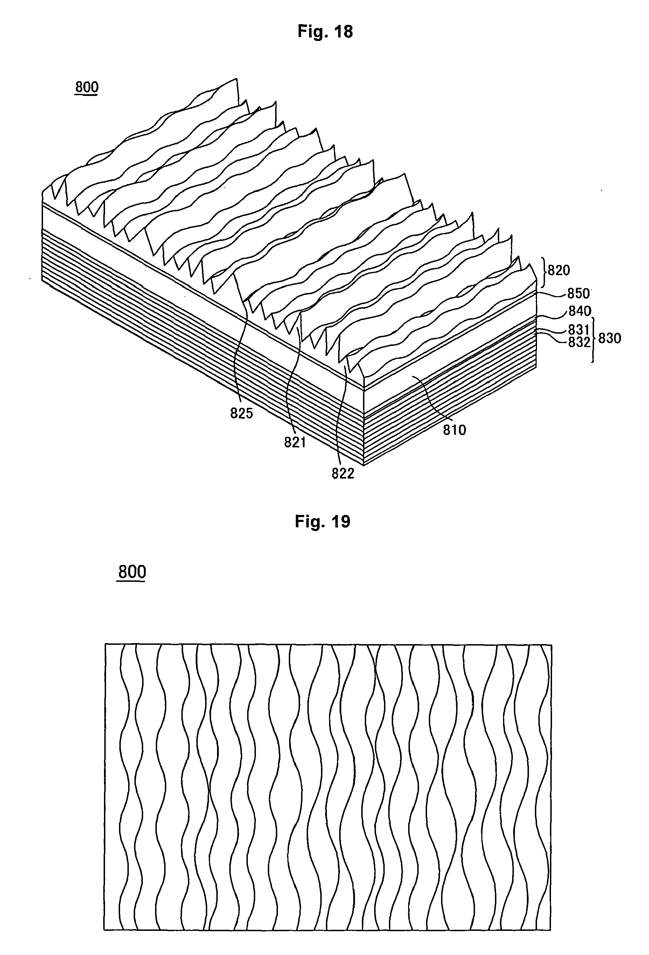

As shown in FIGs. 17 and 18, The optical film 800 may further include a first primer layer on the base film.

The first primer layer 850 may be obtained through a primer processing. The primer processing is performed through a polymer processing on a general polymer film and thus can improve an adhesive force between the polymer film and an ultraviolet (UV) resin. Acrylic-based polymer, ester-based polymer, or urethane-based polymer may by used in the primer processing. A water-soluble polymer material may by used in the primer processing so as to prevent the risk of fire. The primer processing may be performed by coating the above-described polymer material on a base film to be primer-processed using a coater.

The first primer layer 850 thus formed may have substantially a thickness of 5 nm to 300 nm. When the thickness of the first primer layer 850 is equal to or larger than 5 nm, a difficulty about an improvement in an adhesive force caused by the very thin first primer layer 850 can be solved. When the thickness of the first primer layer 850 is equal to or smaller than 300 nm, a coating spot generated in the primer processing and a lump phenomenon of the polymer material can be prevented.

Accordingly, the projection 820 can be prevented from being damaged by a physical contact between the optical film 800 and optical sheets on the optical film 800. Further, the image quality of a liquid crystal display can be improved.

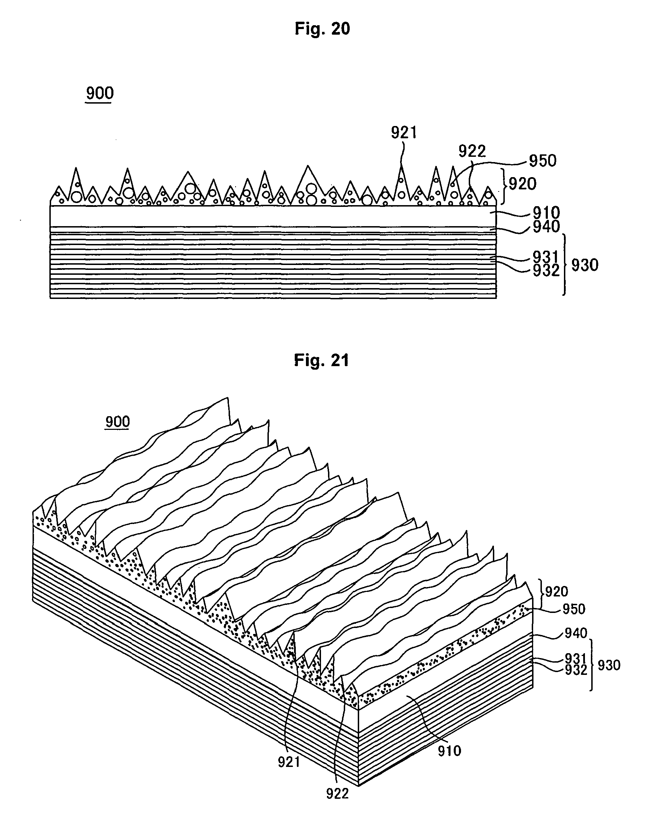

FIGs. 20 and 21 show an optical film 900 according to another exemplary embodiment.

As shown in FIGs. 20 and 21, the optical film 900 may include a base film 910, a plurality of projections 920 on the base film 910, and a reflective polarizing film 930 under the base film 910. The plurality of projections 920 may include a first projection 921 and a second projection 922. A height of the first projection 921 may be different from a height of the second projection 922.

The optical film 900 may further include an adhesive layer 940 between the base film 910 and the reflective polarizing film 930. The adhesive layer 940 can attach the base film 910 to the reflective polarizing film 930. The adhesive layer 940 may be made of acrylic resin.

The plurality of projections 920 may further include a plurality of first beads 950.

More specifically, the plurality of projections 920 may include about 1 to 10 parts by weight of the first bead 950.

Particle diameters of the first beads 950 may be non-uniform. The first beads 950 may be non-uniformly distributed inside the projections 920. All the first beads 950 may be distributed inside the projections 920 so as not to expose the first beads 950 on the surface of the projections 920.

As described above, because the optical film 900 includes the first beads 950 inside the projections 920, diffusion characteristics of the optical film 900 can be improved. Hence, a viewing angle can be improved.

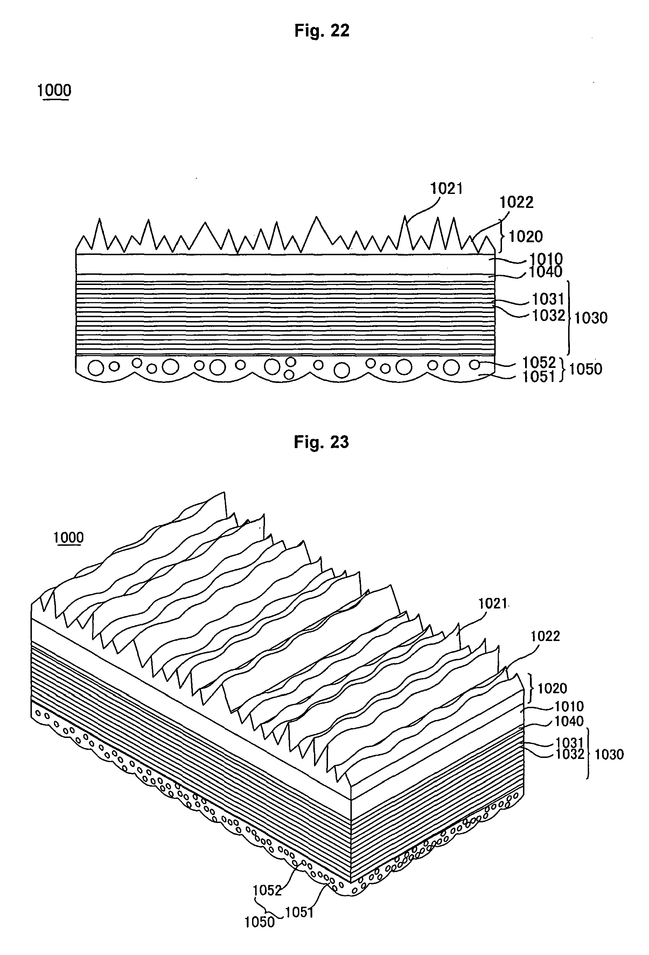

FIGs. 22 and 23 show an optical film 1000 according to another exemplary embodiment.

As shown in FIGs. 22 and 23, the optical film 1000 may include a base film 1010, a plurality of projections 1020 on the base film 1010, and a reflective polarizing film 1030 under the base film 1010. The plurality of projections 1020 may include a first projection 1021 and a second projection 1022. A height of the first projection 1021 may be different from a height of the second projection 1022.

The optical film 1000 may further include an adhesive layer 1040 between the base film 1010 and the reflective polarizing film 1030. The adhesive layer 1040 can attach the base film 1010 to the reflective polarizing film 1030. The adhesive layer 1040 may be made of acrylic resin.

The optical film 1000 may further include a protective layer 1050 under the reflective polarizing film 1030. The protective layer 1050 may include a plurality of second beads 1052. The protective layer 1050 may be a mat layer capable of improving thermal resistance of the optical film 1000, or a diffusion unit capable of diffusing light produced by a light source.

More specifically, the protective layer 1050 may include a resin 1051 and the plurality of second beads 1052 distributed in the resin 1051. The resin 1051 may use a transparent acrylic-based resin with excellent thermal resistance and excellent mechanical characteristics. Examples of the acrylic-based resin may include polyacrylate or polymethylmethacrylate. The second bead 1052 may be made of the same material as the resin 1051 or a different material from the resin 1051. The protective layer 1050 may include about 10 to 50 parts by weight of the second bead 1052 based on the resin 1051.

The size of the second bead 1052 may depend on a thickness of the base film 1010 and may lie substantially in a range between 1 µm to 10 µm. The second beads 1052 may have the substantially equal size and may be regularly distributed inside the resin 1051. Further, the second beads 1052 may have a different size and may be irregularly distributed inside the resin 1051. The second bead 1052 may be the same as the first bead 950 shown in FIGs. 18 and 19, and the second bead 1052 may be different from the first bead 950.

The protective layer 1050 can prevent the optical film 1000 from being deformed by heat generated in the light source. In other words, the resin 1051 with the high thermal resistance can prevent the optical film 1000 from crumpling. Although the optical film 1000 is deformed at a high temperature, the deformed optical film 1000 can be restored to an original shape of the optical film 1000 at a room temperature due to an excellent restoring force. The protective layer 1050 can prevent the optical film 1000 from being damaged by an external impact or a physical force from the outside.

A backlight unit including the optical films according to the above-described exemplary embodiments and a liquid crystal display including the backlight unit will be described below.

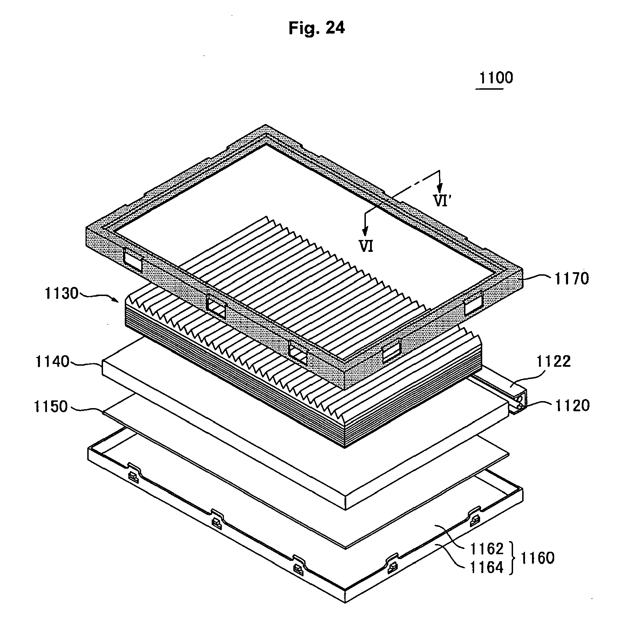

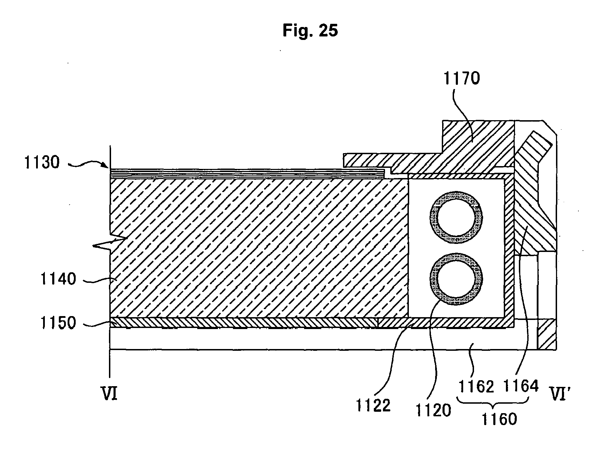

FIGs. 24 and 25 are an exploded perspective view and a cross-sectional view for explaining a configuration of a backlight unit including the optical films according to the exemplary embodiments. FIGs. 24 and 25 show an edge type backlight unit.

Generally, a liquid crystal display may include a liquid crystal panel and a backlight unit providing the liquid crystal panel with light.

As shown in FIGs. 24 and 25, a backlight unit 1100 may include a light source 1120 and an optical film 1130. The backlight unit 1100 may further include a light guide plate 1140, a reflective plate 1150, a bottom cover 1160, and a mold frame 1170.

The light source 1120 can produce light using a drive power applied from the outside and can emit the produced light.

At least one light source 1120 may be positioned at one end of the light guide plate 1140 along a long axis direction of the light guide plate 1140. At least one light source 1120 may be positioned at both ends of the light guide plate 1140. Light emitted from the light source 1120 may be directly incident on the light guide plate 1140. Or, the light emitted from the light source 1120 may be reflected from a light source housing 1122 surrounding a portion of the light source 1120, for example, about 3/4 of an outer circumferential surface of the light source 1120, and then may be incident on the light guide plate 1140.

The light source 1120 may include a cold cathode fluorescent lamp (CCFL), a hot cathode fluorescent lamp (HCFL), an external electrode fluorescent lamp (EEFL), and a light emitting diode (LED), but is not limited thereto.

The optical film 1130 may be positioned on the light guide plate 1140. The optical film 1130 can focus the light emitted from the light source 1120.

The light guide plate 1140 may face the light source 1120. The light guide plate 1140 can guide the light so as to emit upward the light produced by the light source 1120.

The reflective plate 1150 may be positioned under the light guide plate 1140. The reflective plate 1150 can reflect upward the light, which is emitted from the light source 1120 and then is emitted downward via the light guide plate 1140.

The bottom cover 1160 may include a bottom portion 1162 and a side portion 1164 extending from the bottom portion 1162 to form a recipient space. The recipient space may receive the light source 1120, the optical film 1130, the light guide plate 1140, and the reflective plate 1150.

A shape of the mold frame 1170 may be approximately a rectangular. The mold frame 1170 may be fastened to the bottom cover 1160 from an upper side of the bottom cover 1160 in a top-down manner.

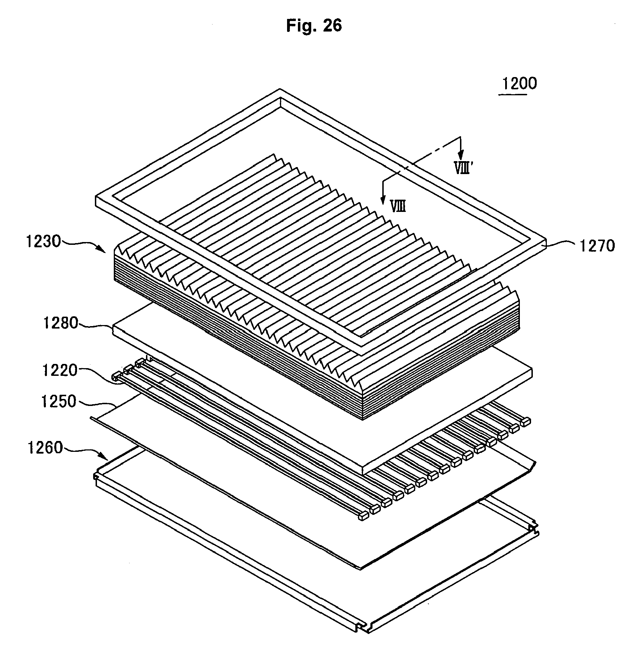

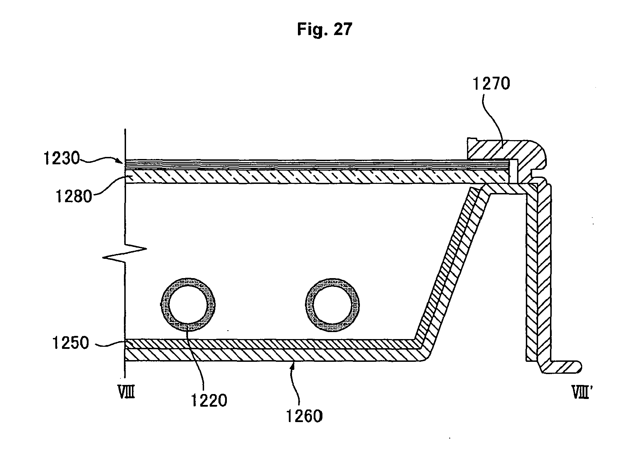

FIGs. 26 and 27 are an exploded perspective view and a cross-sectional view for explaining a configuration of a backlight unit including the optical films according to the exemplary embodiments.

Although FIGs. 26 and 27 show a direct type backlight unit, the present invention is not limited thereto. Since the backlight unit shown in FIGs. 26 and 27 is the same as the backlight unit shown in FIGs. 24 and 25 except a location of a light source and changes in components depending on a change in the location of the light source, the description thereabout is briefly made or entirely omitted.

Generally, a liquid crystal display may include a liquid crystal panel and a backlight unit providing the liquid crystal panel with light.

As shown in FIGs. 26 and 27, a backlight unit 1200 may include a light source 1220 and an optical film 1230. The backlight unit 1200 may further include a reflective plate 1250, a bottom cover 1260, a mold frame 1270, and a diffusion plate 1280.

At least one light source 1220 may be positioned under the diffusion plate 1280. Therefore, light emitted from the light source 1220 may be directly incident on the diffusion plate 1280.

The optical film 1230 may be positioned on the diffusion plate 1280. The optical film 1230 can focus the light emitted from the light source 1220.

The diffusion plate 1280 may be positioned between the light source 1220 and the optical film 1230, and can diffuse upward the light emitted from the light source 1220. The diffusion plate 1280 can make a shape of the light source 1220 undefined and can further diffuse the light.

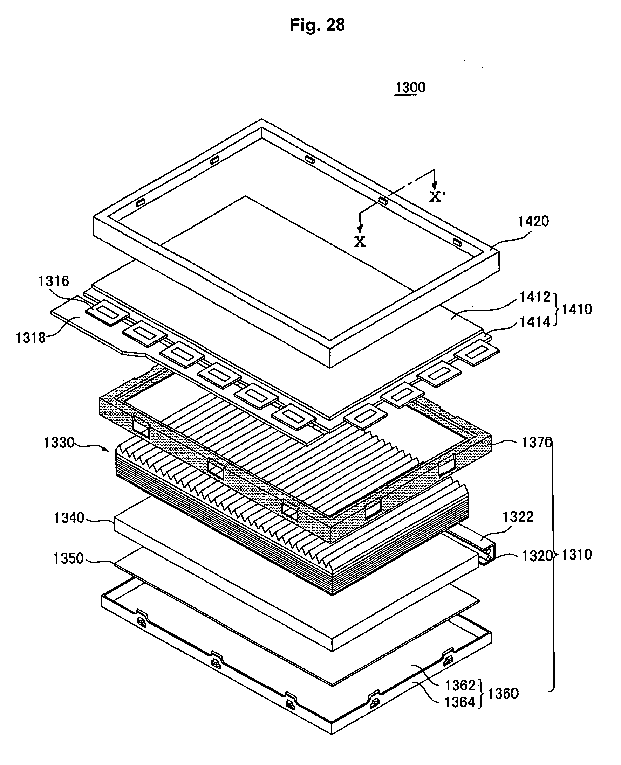

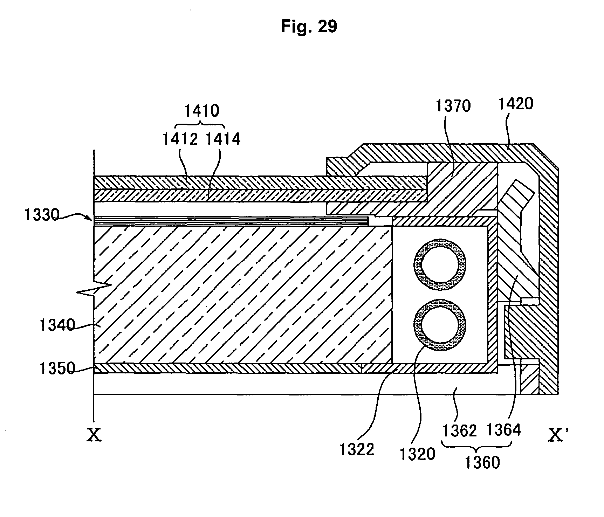

FIGs. 28 and 29 are an exploded perspective view and a cross-sectional view for explaining a configuration of a liquid crystal display. Although a liquid crystal display 1300 shown in FIGs. 28 and 29 includes the backlight unit shown in FIGs. 22 and 23, it is not limited thereto. For example, the liquid crystal display 1300 may include the backlight unit shown in FIGs. 26 and 27.

Since a backlight unit 1310 shown in FIGs. 28 and 29 is described above with reference to FIGs. 24 and 25, the description thereabout is briefly made or entirely omitted.

As shown in FIGs. 28 and 29, the liquid crystal display 1300 can display an image using electro-optical characteristics of a liquid crystal.

The liquid crystal display 1300 may include the backlight unit 1310 and a liquid crystal panel 1410.

The backlight unit 1310 may be positioned under the liquid crystal panel 1410, and can provide the liquid crystal panel 1410 with light.

The backlight unit 1310 may include a light source 1320 and an optical film 1330. The backlight unit 1310 may further include a light guide plate 1340, a reflective plate 1350, a bottom cover 1360, and a mold frame 1370.

The liquid crystal panel 1410 may be positioned on the mold frame 1370. The liquid crystal panel 1410 may be fixed by a top cover 1420 which is fastened to the bottom cover 1360 in a top-down manner.

The liquid crystal panel 1410 can display an image using light produced by the light source 1320.

The liquid crystal panel 1410 may include a color filter substrate 1412 and a thin film transistor substrate 1414 that face each other at liquid crystals therebetween.

The color filter substrate 1412 can achieve colors of an image displayed on the liquid crystal panel 1410. The color filter substrate 1412 may include a color filter array of a thin film form on a substrate made of a transparent material such as glass or plastic. For example, the color filter substrate 1412 may include red, green, and blue color filters. An upper polarizer may be positioned on the color filter substrate 1412.

The thin film transistor substrate 1414 may be electrically connected to a printed circuit substrate 1318, on which a plurality of circuit parts are mounted, through a drive film 1316. The thin film transistor substrate 1414 may apply a drive voltage provided by the printed circuit substrate 1318 to the liquid crystals in response to a drive signal provided by the printed circuit substrate 1318.

The thin film transistor substrate 1414 may include a thin film transistor and a pixel electrode on another substrate made of a transparent material such as glass or plastic. A lower polarizer may be positioned under the thin film transistor substrate 1414.

The foregoing embodiments and advantages are merely exemplary and are not to be construed as limiting the present invention. The present teaching can be readily applied to other types of apparatuses. The description of the foregoing embodiments is intended to be illustrative, and not to limit the scope of the claims. Many alternatives, modifications, and variations will be apparent to those skilled in the art.

## Claims

1. An optical film comprising:
a reflective polarizing film;
a first primer layer on the reflective polarizing film; and
a first projection on the first primer layer.

2. The optical film of claim 1, further comprising a second primer layer under the reflective polarizing film, a thickness of the second primer layer lies substantially in a range between 5 nm and 300 nm.

3. The optical film of claim 1, further comprising a protective layer on the reflective polarzing film.

4. The optical film of claim 1, wherein a thickness of the first primer layer lies substantially in a range between 5 nm and 300 nm.

5. The optical film of claim 1, wherein the first projection is at least one of a microlens array, a lenticular lens array, a diffuser unit, and a prism unit.

6. The optical film of claim 1, wherein the first projection includes a plurality of beads.

7. The optical film of claim 1, wherein the reflective polarizing film includes first layers and second layers alternately stacked on each other, and a refractive index of the first layer is different from a refractive index of the second layer.

8. The optical film of claim 1, further comprising a base film on the reflective polarizing film,
wherein the first primer layer is positioned on the base film.

9. A liquid crystal display device comprising:
a light source;
an optical film on the light source, the optical film including:
a reflective polarizing film;
a base film on the reflective polarizing film;
a first primer layer on the base film;
a first projection on the first primer layer; and
a liquid crystal panel on the optical film.

10. A liquid crystal display device of claim 9, wherein a thickness of the first primer layer lies substantially in a range between 5 nm and 300 nm.

11. An optical film comprising:
a reflective polarizing film;
a base film on the reflective polarizing film; and
a plurality of projections on the base film, the projections including a first projection and a second projection, a height of the first projection being different from a height of the second projection.

12. The optical film of claim 11, wherein the projections have different heights along a longitudinal direction of the projections.

13. The optical film of claim 11, further comprising a first primer layer on the base film.

14. The optical film of claim 13, wherein a thickness of the first primer layer lies substantially in a range between 5 nm and 300 nm.

15. The optical film of claim 11, wherein the projection includes a plurality of valleys, and depths of the valleys are different from each other.

16. The optical film of claim 11, wherein an interval between the projections lies substantially in a range between 1 µm and 10 µm.

17. The optical film of claim 11, wherein the projection includes a plurality of peaks, and heights of the peaks changes randomly.

18. The optical film of claim 11, wherein the plurality of projections include a plurality of first beads.

19. The optical film of claim 11, further comprising a protective layer under the reflective polarizing film, the protecting layer being a diffusion unit or a mat layer.

20. The optical film of claim 19, wherein the protective layer includes a resin and a plurality of second beads.
